# EUROPEAN PATENT SPECIFICATION

(11) **EP 0 784 847 B1**
(45) Date of publication and mention of the grant of the patent: **27.02.2002**
(21) Application number: 95936281.5
(22) Date of filing: 06.10.1995
(51) Int. Cl.: G11B 9/00, G01N 27/00, G01B 7/34

(54) **A MEMORY DEVICE**
SPEICHERVORRICHTUNG
DISPOSITIF A MEMOIRE

(30) Priority: 07.10.1994 JP 27029794
(43) Date of publication of application: 23.07.1997
(73) Proprietor: Hewlett-Packard Company, A Delaware Corporation, Palo Alto, CA 94304 (US)
(72) Inventor: SAITO, Mitsuchika, Kawasaki-shi, Kanagawa (JP); YI, You-Wen, Yokohama-shi, Kanagawa (JP)
(74) Representative: Schoppe, Fritz, Dipl.-Ing.
(86) International application number: US9512932
(87) International publication number: WO9611472

(56) References cited:
- EP-A- 0 247 219
- EP-A- 0 452 852
- WO-A-89/07256
- WO-A-91/00592
- DE-C- 4 107 605
- JP-A- 5 280 922
- US-A- 5 216 631
- US-A- 5 235 187
- IBM TECHNICAL DISCLOSURE BULLETIN, vol. 37, no. 7, 1 July 1994, ARMONK, N.Y., US, page 363 XP000455548 "WEAR-TOLERANT, FINE, ELECTRIC PROBE FOR DATA STORAGE"
- PATENT ABSTRACTS OF JAPAN vol. 017, no. 199 (E-1352), 19 April 1993 & JP,A,04 343280 (CANON INC), 30 November 1992,
- PATENT ABSTRACTS OF JAPAN vol. 014, no. 260 (P-1056), 5 June 1990 & JP,A,02 071439 (CANON INC), 12 March 1990,
- PATENT ABSTRACTS OF JAPAN vol. 018, no. 667 (E-1645), 15 December 1994 & JP,A,06 261558 (CANON INC), 16 September 1994,
- PATENT ABSTRACTS OF JAPAN vol. 018, no. 278 (P-1743), 26 May 1994 & JP,A,06 044618 (MATSUSHITA ELECTRIC IND CO LTD), 18 February 1994,
- PATENT ABSTRACTS OF JAPAN vol. 007, no. 032 (P-174), 8 February 1983 & JP,A,57 186246 (TOKYO SHIBAURA DENKI KK), 16 November 1982,
- REVIEW OF SCIENTIFIC INSTRUMENTS, vol. 64, no. 12, 1 December 1993, pages 3515-3520, XP000425987 JARVIS S P ET AL: "A NOVEL FORCE MICROSCOPE AND POINT CONTACT PROBE"
- APPLIED PHYSICS LETTERS, vol. 61, no. 19, 9 November 1992, pages 2293-2295, XP000324729 MAJUMDAR A ET AL: "NANOMETER-SCALE LITHOGRAPHY USING THE ATOMIC FORCE MICROSCOPE"

## Description

The invention concerns a memory device in which information is read and written by means of a plurality of minute probes, and specifically concerns a memory device of the type in which the stray capacitance of the wiring between the probes and the write-read circuits (hereafter referred to as W/R circuits) is small,the device is relatively immune to the effects of noise,the cost of manufacturing the device is low, and the recording density of the device is high.

Conventional examples of memory devices which accomplish the reading and writing of information by means of a plurality of minute probes include such devices as are disclosed in J. Sliwa, Jr., *Microvibratory Memory Device,* Japanese Patent Application Kokai No. 4-289580, and U.S. Patent No. 5,216,631 (1 June 1993). In such devices, techniques for controlling the spacing between needles and the surfaces of detected objects in STM (scanning tunnel microscopes), and in AFM (atomic force microscopes) operated in a non-contact mode, are used to control the spacing between needles and memory media in memory devices. The reading and writing of data in such memory devices are performed while adjusting the distance between the surface of the memory medium and the tips of the needles. This distance adjustment is accomplished by detecting the distance between the surface of the memory medium and the tips of the needles.

Furthermore, in the case of memory devices that are fabricated in accordance with *Sliwa (id.)*, the distance between the surface of the memory medium and the tips of the needles is detected by means of tunnel current or force. Accordingly, in such memory devices, detection circuits, and signal processing circuits as are used for distance detection and distance, control must be provided for each probe in addition to W/R circuits. These circuits, *e.g.* W/R circuits, detection circuits, and signal processing circuits, cause an overall increase in the dedicated surface area. As a result, in cases where the probes and the abovementioned circuits are installed on the same substrate, said circuits add to the difficulty of achieving a high probe density.

For the above reasons, in memory devices that are fabricated in accordance with *Sliwa (id.),* it has been necessary to install the aforementioned W/R circuits, detection circuits, and signal processing circuits on a different substrate from the substrate on which the aforementioned probes are formed. As a result, the parts on which the aforementioned needles are formed, and the aforementioned circuits, are naturally formed in separate locations by separate manufacturing processes.

In devices that are fabricated in accordance with *Sliwa (id.),* the respective probes are manufactured by a hybrid semiconductor process. Specifically, in the case of devices that are fabricated in accordance with *Sliwa (id.)*, the respective probes and the various circuits associated with said probes, *e.g.* W/R circuits, detection circuits, and signal processing circuits, are not installed on the same substrate, *i.e.* they are installed in separate locations. Accordingly, said probes and circuits are connected by relatively long wiring. As a result, the distance between the probes and the various circuits corresponding to said probes varies from probe to probe, thus creating a skew in the probes so that a high parallelness cannot be obtained. This leads to problems, such as a difference in the electrical characteristics of the areas between the probes and the respective circuits corresponding to said probes. As a result, performance values which are important in a memory device, *e.g.* data transmission rate, assurance of redundancy, and error correction functions are lost. Furthermore, because of an increase in stray capacitance and noise between the probes and the W/R circuits, an increase in the bit size of the memory medium becomes unavoidable.

In memory devices of this type, the amount of data that are read or written in one access naturally increases with an increase in the probe density. In the wiring used for the transmission of such reading or writing signals, at least one line is required for each probe. As a result, the large number of lines required interferes with the achievement of a high probe density.

US-A-5,216,631 relates to a memory device whose media scanning is vibrationally or inertially driven. The device comprises cantilevers attached at one end and capable of vibrating, wherein on the opposite end of each cantilever, an array of storage bits is disposed. Opposite the surface of the cantilever is a read/write head which is similar in nature to a scanning tunneling microscopy or atomic force microscopy scanning-tip.

US-A-5,235,187 relates to self-aligned, nanometer, integrated tunneling tips for use in sensors and analytical instruments. The tips and beams to which same are attached are fabricated from a single crystal silicon substrate and the tips are electrically isolated from the substrate by fabricating insulating segments on the beam structure.

JP-A-6044618 discloses a recording device having an electric probe at the tip of a cantilever adjacent to or in contact with the recording surface.

In Applied Physics Letters, Vol. 61, November 19, 1992, page 2293 to 2295 nanometer-scale lithography using an atomic force microscope is described. When using the atomic force microscope for nanometer-scale lithography on ultra thin films, the sharp tip of the atomic force microscope which is mounted on a cantilever is brought very close or in contact with a substrate surface by piezoelectric actuators.

In the Journal of Vacuum Science and Technology, A 7(1989), No. 4, pages 2906 to 2913, the measurement of nanomechanical properties and surface forces of materials using an atomic force microscope is described, wherein the tip-surface interaction is solely due to surface forces, wherein the cantilever beam holding the tip does not contribute an external or applied load.

It is the object underlying the present invention to provide an improved memory device.

This object is achieved by a memory device according to claim 1 and according to claim 5.

The invention provides a memory device: (a) in which there is little stray capacitance in the wiring between the probes and the W/R circuits, so that the device is relatively immune to the effects of noise; (b) in which a high parallelness is maintained for the respective probes; (c) in which the cost of manufacture is low; and (d) in which the recording density is high.

The invention is based, *inter alia,* upon the following:
- If the probes and the various circuits, such as W/R circuits and probe driving circuits, corresponding to said probes are formed on the same substrate by a series of forming processes, said probes and circuits can be installed in close proximity to each other, so that the high parallelness of the probes is not lost.
- If the exchange of signals between a plurality of W/R circuits and peripheral circuits is accomplished using a single bus, the high density of the probes is not lost.
- By selecting an appropriate mechanism for use as the probe actuating mechanism, it is possible to simplify the circuits installed adjacent to the probes, *e.g.* W/R circuits and probe driving circuits with detection circuits omitted, so that the probe density can be increased even further.

Specifically, the memory device herein is characterized by the fact that said memory device is equipped with a memory substrate that has a memory medium formed on its surface, and a probe device that includes the following elements:
(a) a plurality of probes with conductive needles that are used to read and write information in the aforementioned memory medium;
b) a positioning device that is used to position the aforementioned conductive needles in prescribed positions on the surface of the aforementioned memory medium with all of said needles being positioned at the same time;
(c) W/R circuits that are used to read and write information in the aforementioned memory medium via the aforementioned conductive needles; and
(d) probe driving circuits that are provided for each of the aforementioned conductive needles, and that are used to place the surface of the aforementioned memory medium and the tips of the aforementioned conductive needles in a state of contact.

The aforementioned probes, W/R circuits, and probe driving circuits are formed in close proximity to each other on the aforementioned probe device by means of a monolithic semiconductor process. Assemblies of probes, W/R circuits, and probe driving circuits which are thus installed in close proximity to each other are referred to below as probe cells.

In the invention, a plurality of probe cells are installed in one memory device, preferably a large number, such as 100,000 probe cells per memory device. By installing such a large number of probe cells, it is possible to achieve a great increase in the amount of information read or written per unit time. The probe cells may be installed in either a one-dimensional arrangement or a two-dimensional arrangement. Ordinarily, however, a two-dimensional arrangement is preferable from the standpoint of achieving a high recording density.

In the invention, the probe cells are manufactured by a series of processes based on monolithic semiconductor processes and micro-machining processes. Accordingly, the manufacturing process used to manufacture the respective probes and circuits associated with said probes is greatly simplified compared to conventional manufacturing processes, so that the cost of the memory device as a whole is reduced.

Furthermore, especially because the W/R circuits and probes are formed in close proximity to each other, a high parallelness is insured for the respective probes. Moreover, because the distance between each probe and the corresponding W/R circuit can be made the same for all probes, the stray capacitance of the wiring is much smaller than in conventional devices, so that the effects of noise can be greatly reduced. In the invention, furthermore, because the probe cells are manufactured as described above by a series of processes based on monolithic semiconductor processes and micro-machining processes, variation in the probe cells and the circuits making up said cells can be reduced.

An ordinary bus line system is used for the transmission of signals between the W/R circuits and peripheral circuits. The rate at which information is read or written is low compared to the data transmission rate of an ordinary bus line. Accordingly, a single bus line can be used for 100 or more probe cells. Thus, there is no problem of the high probe density being impeded by the use of a bus line.

In the invention, the probes used may be probes actuated by electrostatic force or probes actuated by piezoelectric force (bimorph type). Probes that are actuated by electrostatic force have a simpler structure than probes that are bimorph-actuated. In the case of probes that are actuated by electrostatic force, the memory substrate can be used as an electrode to drive the probes. Specifically, an electrostatic force is generated between said electrode and the probes, and the probes are actuated by this electrostatic force. Probes that are thus actuated by electrostatic force have a microactuator mechanism, and are basically cantilever type probes. In the case of such cantilever type probes, control of the conductive needles can be accomplished more efficiently by attractive-force control than by repulsive-force control.

Wafers with various layer structures can be used to manufacture the probe device used in the invention. Ordinarily, the wafers used in this case are wafers consisting of a silicon (Si) surface layer, a silicon oxide (SiO₂) intermediate layer, and a silicon undersurface layer, which can easily be obtained from wafer makers. By using wafers of this type, it is possible to use the silicon surface layer to form the main-body parts (bridge parts) of the probes.

Furthermore, the probe device used in the invention can also be manufactured using bulk silicon wafers. In such a case, the main-body parts of the probes are ordinarily formed using polysilicon which is deposited onto the surface of a silicon oxide layer formed on the silicon layer.

Moreover, in the memory device of the invention, auxiliary electrodes which have fins that are parallel to the memory substrate (also referred to as electrode fins herein) may be provided. In the case of such probes, the electrode fins are ordinarily formed at a prescribed height facing the memory substrate. As a result, the probes can be easily driven regardless of projections or indentations in the circuits formed on the probe device.

In cases where the probes and various circuits, *e.g.* W/R circuits, are formed on the same substrate, circuit elements such as transistors, are formed so that said elements have a thickness on the surface of the substrate of the probe device, *e.g.* on the original surface layer of the wafer.

Accordingly, in cases where the probes are formed using the aforementioned silicon surface layer or polysilicon, a large space must be left between the memory medium and the probes. As a result, the following problem arises: *i.e.* in cases where an electrostatic force is generated between the probes and the memory substrate, and said probes are controlled by attractive-force control, the driving force is reduced, so that good control cannot be achieved. In the invention, this problem is solved by forming auxiliary electrodes with fins, *i.e.* electrode fins, on the probes, and driving the probes by applying a voltage across said electrode fins and the memory substrate.

Conductive needles that are used to write information into the memory medium or read information recorded in the memory medium are installed on the tips of the probes so that said needles face the memory medium. In the invention, the tips of these conductive needles are formed from columnar parts that have a uniform cross section. In such a case, even if the conductive needles should be consumed by wear, the area of the tips of said conductive needles contacting the recording medium does not change. Accordingly, the possibility of errors occurring during reading or writing is greatly reduced.

In the memory device herein, the memory substrate is constructed from a laminated body which consists of, for example a substrate layer and a memory medium layer. Here, for example silicon is used as the substrate layer. The memory medium layer may consist of any of various materials that allow writing by electrical stimulation from the conductive needles, and that allow the electrical detection of written information. For example, a material that traps electrons on the memory medium surface when electrons are applied to said memory medium surface by the conductive needles may be used. Alternatively, a material in which the memory medium is polarized by the potential applied to the conductive needles may be used. In concrete terms, materials such as dielectric substances or ferroelectric substances may be used as the memory medium.

In the manufacturing process, warping of the memory substrate may occur as a result of thermal expansion or thermal contraction. In cases where such warping occurs in the memory substrate, the spacing between the memory medium and the tips of the needles varies from probe to probe. In such cases, control of the probes becomes complicated. For example, control of the distance between the memory medium and the tips of the needles, and control of the contact pressure, must be performed in accordance with the degree of warping of the memory medium. Furthermore, in most cases, such warping constitutes a fatal defect in the memory substrate.

Such warping of the memory substrate can be prevented or reduced by increasing the thickness of the memory substrate. In such a case, however, the weight of the memory medium is increased. As a result, the following problem arises: *i.e.* in memory devices which have a mechanism that positions the probes by moving the memory medium, the reading and writing of information cannot be performed at a high speed.

In the memory device herein, warping of the aforementioned memory substrate can be greatly reduced by forming a multiple number of lattice-form separating grooves in said memory substrate. A multiple number of recording regions, *i.e.* where the area accessed by one conductive needle corresponds to one recording region, are formed on the surface of the memory medium. Ordinarily, the aforementioned separating grooves are formed so that they are positioned at the boundaries of the aforementioned recording regions. In the case of a memory substrate in which separating grooves are formed according to the invention, there is no need to increase the thickness of said memory substrate. Accordingly, the weight of the memory substrate can be reduced. Thus, for example, high-speed reading and writing of data are possible even in cases where the positioning of the probes is accomplished by moving the memory medium.

As was described above, the conductive needles write information by applying an electric stimulus to prescribed recording regions on the surface of the memory medium. Furthermore, said needles also act to detect information written in the aforementioned recording regions. Ordinarily, this is accomplished by electric detection. In cases where the memory medium is a ferroelectric material, the conductive needles contact the surface of the ferroelectric memory medium, and thus detect the polarity of the aforementioned surface (ordinarily, information is acquired by destructive reading), or cause polarization of the surface of the memory medium to a prescribed polarity, *i.e.* record information.

To read or write information, the conductive needles of the respective probes making up the probe device are all positioned at the same time in prescribed positions on the surface of the memory medium by means of a positioning device. This positioning device includes a control mechanism, hereafter referred to as the X-Y control mechanism, which controls movement in the X and Y directions, *i.e*., in the plane parallel to the surface of the memory medium. The movement of the probes along the surface of the memory medium is controlled by this X-Y control mechanism.

Here, it is sufficient if the positioning device is capable of causing relative movement of the conductive needles of the probes in the X and Y directions with respect to the memory substrate. For example, the memory substrate may be maintained in a static state and the probes may be caused to move, or conversely, the probes may be maintained in a static state and the memory substrate may be caused to move. Furthermore, it would also be possible to cause the memory substrate to move in the X direction, and to cause the probes to move in the Y direction. The X-Y control of the aforementioned probes or, alternatively, the Z control involved in the aforementioned positioning, can be accomplished by means of universally known control techniques using piezoelectric materials (piezoelectric elements).

In cases where the reading and writing of information are performed with the conductive needles of the probes contacting the memory medium, it is not necessary to detect and control the distance between the surface of the memory medium and the tips of the conductive needles. In such cases, the probe driving circuits are capable of controlling the probes so that the repulsive force applied to the tips of the aforementioned conductive needles does not exceed the atomic bonding force of the tips of said needles. As a result, wear and damage to the conductive needles are prevented. In such cases, furthermore, wear and damage to the conductive needles can be prevented by setting the repulsive force applied to the conductive needles at a smaller value than the abovementioned bonding force during the reading or writing of information.

Furthermore, because the tips of the conductive needles are formed as columnar parts which have a uniform cross section, there is no change in the area of contact with the memory medium even if the conductive needles should become wom. Accordingly, no problems such as reading errors, arise. For example, in cases where the memory medium is a ferroelectric material, the polarity of said material is detected. In concrete terms, this is ordinarily accomplished by applying an appropriate positive or negative voltage to the conductive needles, and detecting the current response to said voltage application, *e.g.* the change in the current value or the integrated value of the current, using an appropriate detection means, such as a sensing amplifier. In this way, it can be determined whether or not the aforementioned current response is accompanied by a reversal of polarity caused by the aforementioned voltage application. In cases where such destructive reading is performed, the destroyed data can be rewritten following reading.

Because the repulsive force applied to the conductive needles is dispersed through more than one atom in the tips of said conductive needles, the conductive needles do not necessarily suffer any wear or damage, even if the inter-atomic bonding force of the tips of said conductive needles should be smaller than the abovementioned repulsive force. For example, in cases where the material of the tips of the conductive needles is SiC, the incidence of wear or damage in said conductive needles can be greatly Teduced by setting the repulsive force at, for example approximately 6 nN or less. In cases where the value of the repulsive force is set at, for example approximately 1 nN or less, the incidence of wear or damage can be reduced to a practical level regardless of the material of the tips of the conductive needles.

Furthermore, the conductive needles can be controlled so that the contact between the surface of the memory medium and the conductive needles is continuous, *i.e.* so that said parts are in contact during positioning movement as well. In other words, the system can be designed so that the reading and writing of information are performed by the W/R circuits when the probes are moved in the X and Y directions, with the conductive needles contacting the surface of the memory medium, so that the conductive needles are positioned at prescribed points in the recording regions. Alternatively, it is also possible to control the memory medium or the conductive needles so that the contact between the surface of said memory medium and said conductive needles is intermittent. Furthermore, the probes can also be applied to devices other than memory devices which have conductive needles, *e.g.* scanning probe microscopes.
Figure 1 is an explanatory diagram that illustrates one embodiment of the memory device of the invention in which the probes are cantilever type probes which have the form of long flat plate-form bridge parts;
Figure 2 is a magnification of one of the probes in Figure 1;
Figure 3 (A) is a wiring diagram that illustrates the wiring of the electrodes and the probe driving circuit of each probe in a case where the probes are controlled by repulsive-force control;
Figure 3 (B) is a wiring diagram that illustrates the wiring of the electrode fins (PF) and electrode (PM) of each probe in a case where the probes are controlled by attractive-force control;
Figure 4 shows an outline of the memory device of the invention;
Figure 5 illustrates an embodiment in which electrode fins are installed on the probe shown in Figure 2;
Figure 6 illustrates a probe device used in the present invention, in which L-shaped bridge parts are used as probes;
Figure 7 is a magnification of one of the probes shown in Figure 6;
Figure 8 illustrates an embodiment in which electrode fins are installed on the probe shown in Figure 7;
Figure 9 shows the condition of the probe following probe manufacturing processes (1-1) and (1-2) in the invention;
Figure 10 shows the condition of the probe following probe manufacturing process (1-3) in the invention;
Figure 11 shows the condition of the probe following probe manufacturing processes (1-5) and (1-6) in the invention;
Figure 12 shows the condition of the probe following probe manufacturing processes (1-7) and (1-8) in the invention;
Figure 13 shows the condition of the probe following probe manufacturing processes (1-9) and (1-10) in the invention;
Figure 14 shows the condition of the probe following probe manufacturing processes (1-11) and (1-12) in the invention;
Figure 15 shows the condition of the probe following probe manufacturing processes (1-13) through (1-16) in the invention;
Figures 16 (A) through (D) are explanatory diagrams which illustrate the lift-off process in (1-18);
Figure 17 shows the condition of the probe following probe manufacturing processes (1-17) and (1-18) in the invention;
Figure 18 illustrates a problem encountered in the case of conventional probes;
Figure 19 illustrates a probe used in the invention which has the shape of a bridge part with a reverse bend;
Figure 20 illustrates a case in which electrode fins (PF) are installed on one of the arms of the probe shown in Figure 19;
Figure 21 illustrates a probe that is formed by joining the tip ends of the respective arms of a pair of the probes consisting of bridge parts with a reverse bend shown in Figure 19;
Figure 22 shows a probe with electrode fins, which is formed by applying the NPN insulating structure of the probe shown in Figure 8 to the probe with a reverse-bend structure shown in Figure 21;
Figure 23 illustrates the actuation of the probes in a case where probes having the form of a bridge part with a reverse bend are used; and
Figure 24 illustrates one example of a memory substrate having lattice-form grooves formed in its surface, which is used in the memory device of the invention, and in which Figure 24 (A) is a model sectional view, and Figure 24 (B) is a model plan view.

The following designations are consistently applied in connection with the figures and in the following detailed description of the invention:
(1) Probe device, (1A) Semiconductor surface layer, (1B) Insulating intermediate layer, (1C) Semiconductor undersurface layer, (2) Probe, (21) Probe main body, (a) Semiconductor layer, (b) Insulating layer, (c) Metal wiring layer, (21A) First arm of L-shaped bridge, (21B) Second arm of L-shaped bridge, (211-214) Arms of bridge with reverse bend, (23) Groove, (22) Conductive needle, (22a) Tip of conductive needle, (31) W/R circuit, (32) Probe driving circuit, (4) Probe cell, (5) Bus line, (7) Memory substrate, (71) Memory medium, (72) Memory substrate, (73) Separating grooves, (91) Positioning device, (P1, P2) Probe driving electrodes, (P3) Probe driving auxiliary electrodes, (PF) Electrode fins, (PM) Electrode formed on memory substrate, (S) Substrate surface of probe device.

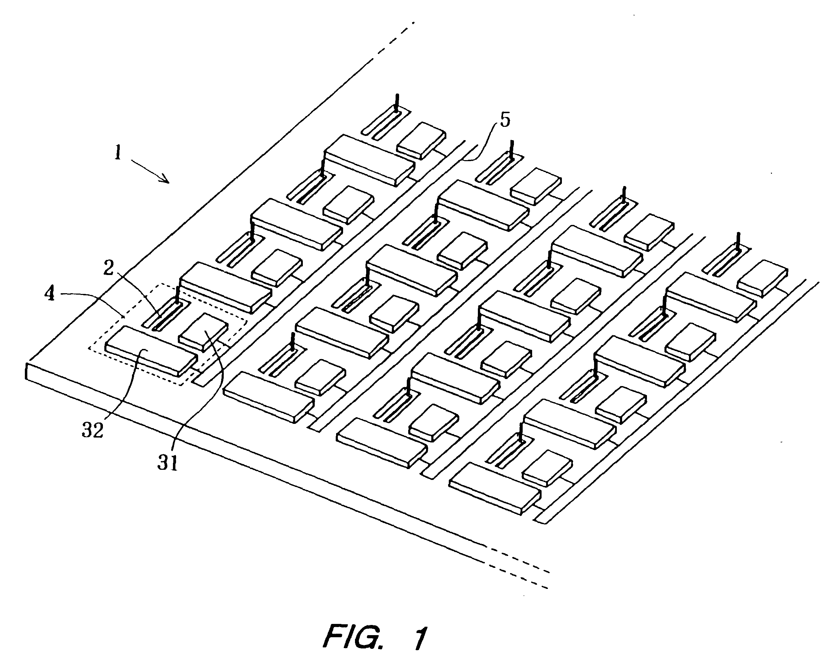

Figure 1 illustrates one example of the probe device. In Figure 1, probes (2) are formed in an array on the probe device (1), and W/R circuits (31) and probe driving circuits (32), corresponding to said probes (2), are formed in close proximity to said probes (2). Here, the respective probes (2), W/R circuits (31), and probe driving circuits (32) constitute probe cells (4). Bus lines (5) are formed on the surface of the probe device (1). The W/R circuits (31) and probe driving circuits (32) exchange signals with circuits installed on the periphery of the probe device (1) via the bus lines (5) and terminals (not shown in the figures) which are formed on the probe device (1). In the memory device of the invention, as described below, the probes (2), W/R circuits (31), probe driving circuits (32), and bus lines (5) are formed by a monolithic semiconductor process.

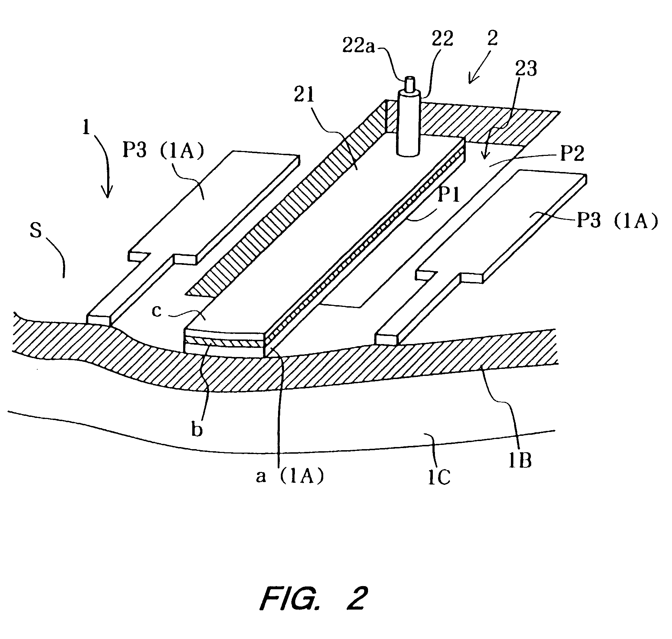

In Figure 2, one of the probes (2) shown in Figure 1 is illustrated in detail. The probe device (1) shown in Figure 2 can be manufactured from, for example a wafer consisting of a semiconductor surface layer (1A), an insulating intermediate layer (1B), and a semiconductor undersurface layer (1C).

In one preferred embodiment of the invention, the main body (21) of each probe (2) consists of a cantilever, *i.e.* a long plate-form part, and said probe main body (21) is formed so that it protrudes from the substrate surface (S) which is the surface of the insulating intermediate layer (1B). A conductive needle (22) is formed on the tip of the probe main body (21), and the tip (22a) of said conductive needle (22) is formed as a columnar part which has a uniform cross section. The probe main body (21) has a semiconductor layer (a), formed from the semiconductor surface layer (1A), which is connected to the corresponding probe driving circuit (32) (see Figure 1), and an insulating layer (b) which is formed on the surface of this semiconductor layer (a). A metal wiring layer (c) is formed on the surface of the insulating layer (b). The conductive needle (22) and the corresponding W/R circuit (31) (see Figures 1 and 2) are electrically connected by this metal wiring layer (c).

The probe main body (21) is formed so that it protrudes over a groove (23), and the semiconductor undersurface layer (1C) is exposed at the bottom of said groove (23). This semiconductor undersurface layer (1C) and the semiconductor electrode layer (a) are insulated from each other by the insulating intermediate layer (1B). The semiconductor layer (a) forms a driving electrode (P1), while the bottom surface of the groove (23), *i.e.* the exposed surface of the semiconductor undersurface layer (1C), forms a driving electrode (P2).

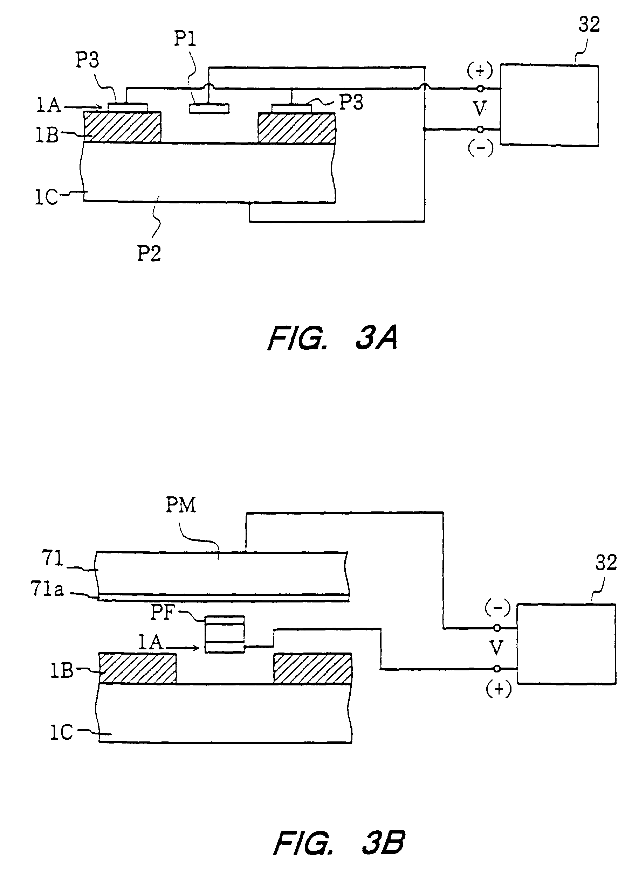

A pair of auxiliary electrodes (P3, P3), formed from the semiconductor surface layer (1A), are formed on the substrate surface along the long sides of the groove (23). As is shown in Figure 3 (A), the electrodes (P1, P2, P3) are electrically connected to the probe driving circuit (32). In the same figure, the probe driving circuit (32) is wired so that the electrodes (P1) and (P2) are minus poles and the auxiliary electrodes (P3) are plus poles. Accordingly, desired control can be accomplished by applying an appropriate voltage V across (P1, P2) and (P3).

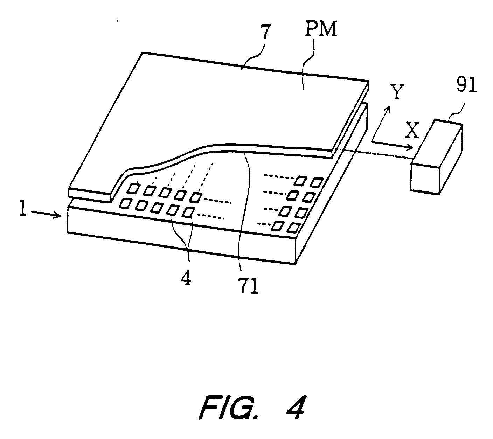

Figure 4 is an explanatory diagram that illustrates the memory device of the invention. The probe device (1) which was described above or a probe device (1) which is described later, along with the probe cells (4) formed on said substrate (1), is shown in Figure 4, together with a memory substrate (7). A portion of the memory substrate (7) is cut away in the figure. In Figure 4, the conductive needles (see (22) in Figures 1 and 2) of the respective probes, for example see (2) in Figures 1 and 2, are all positioned at the same time in desired positions on the memory medium (71), which constitutes the surface layer of the memory substrate (7), by means of a positioning device (91). It is sufficient if the distance of relative movement between the probe device (1) and the memory substrate (7) is, at most, equal to the spacing of the conductive needles (22).

Figure 4 shows a case where the movement of the memory substrate (7) is controlled in the X and Y directions by means of the positioning device (91) during positioning. However, it would also be possible to control the movement of the probe device (1) in the X and Y directions. Alternatively, it would also be possible, for example to control the movement of the memory substrate (7) in the X direction, and to control the movement of the probe device (1) in the Y direction. Furthermore, in Figure 4, the positioning device (91) is shown in conceptual terms, and differs from an actual positioning device.

In the memory device of the invention, the memory substrate (7) can be made into an electrode that interacts with the probes by means of electrostatic force. In this case, the probes are subjected to attractive-force control by means of the electrostatic force between the probes and the memory substrate (7). Ordinarily, in the case of such probe control, attractive-force control allows the probes to be controlled by means of a smaller voltage than repulsive-force control. However, in cases where the main body (21) of each probe is of the type shown in Figures 1 and 2, the W/R circuit (31) and probe driving circuit (32) of each probe are ordinarily formed so that they protrude upward from the substrate surface (S) (see Figure 2) of the probe device (1). As a result, the distance between the probe main bodies (21) and the memory substrate (7) is increased, so that favorable probe control can sometimes not be accomplished if the probes (2) are driven using the abovementioned attractive-force control.

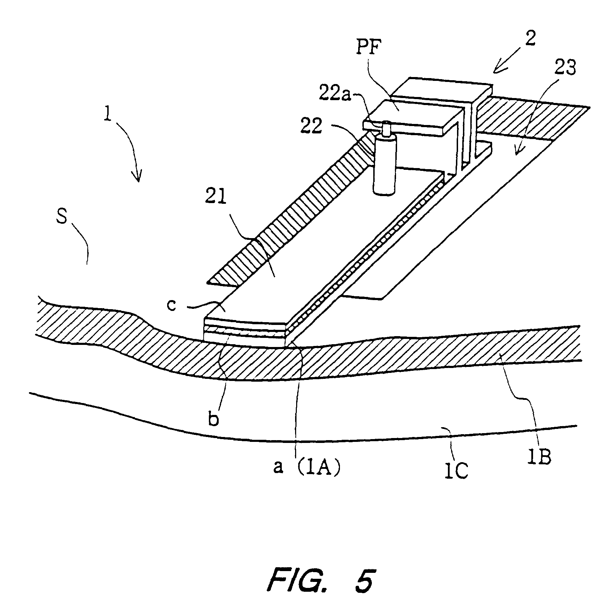

In such cases, auxiliary electrodes, *e.g.* electrode fins (PF), which have fins parallel to the memory substrate (7) may be formed at a prescribed height on the memory substrate side of the tips of the probe main bodies (21), as shown in Figure 5. In this case, the auxiliary electrodes (P3) shown in Figure 2 are not installed. Instead, attractive-force control is performed between the electrode fins (PF) and an electrode (PM) (see Figure 4) formed on the memory substrate (7). By installing such electrode fins (PF), it is possible to control the probes (2) with a small voltage. In Figure 5, as in Figure 2, the main body (21) of each probe consists of a semiconductor layer (a), an insulating layer (b), and a metal wiring layer (c) which is formed on the upper surface of said insulating layer (b). The semiconductor layer (a) is electrically connected to the electrode fins (PF) and the corresponding probe driving circuit (32). Furthermore, the metal wiring layer (c) is electrically connected to the conductive needle (22) and the W/R circuit (31).

Figure 3 (B) shows the polarity of the electrode fins (PF) and the electrode (PM) in cases where the probes (2) are controlled by attractive-force control. In each probe cell, (PF) and (PM) are electrically connected to the probe driving circuit (32). In the same figure, said probe driving circuit (32) is wired so that (PM) is a minus pole, and (PF) constitutes a plus pole. The desired control can be accomplished by applying an appropriate voltage V across (PM) and (PF).

In the memory device of the invention, as is shown in Figure 1, the W/R circuits (31) and probe driving circuits (32) are installed in close proximity to the probes (2). Accordingly, the length of the wiring between these circuits, especially the W/R circuits (31), and the probes is extremely short, so that the effects of stray capacitance and noise are almost negligible. However, because the long plate-form probes (2) shown in Figures 1, 2 and 5 are supported at one point and thus protrude from the substrate surface (S) (see Figures 2 and 5) of the probe device (1), said probes (2) may flex in the direction parallel to said substrate surface (S) so that the positions of the conductive needles (22) are shifted about the supporting points of the probes (2).

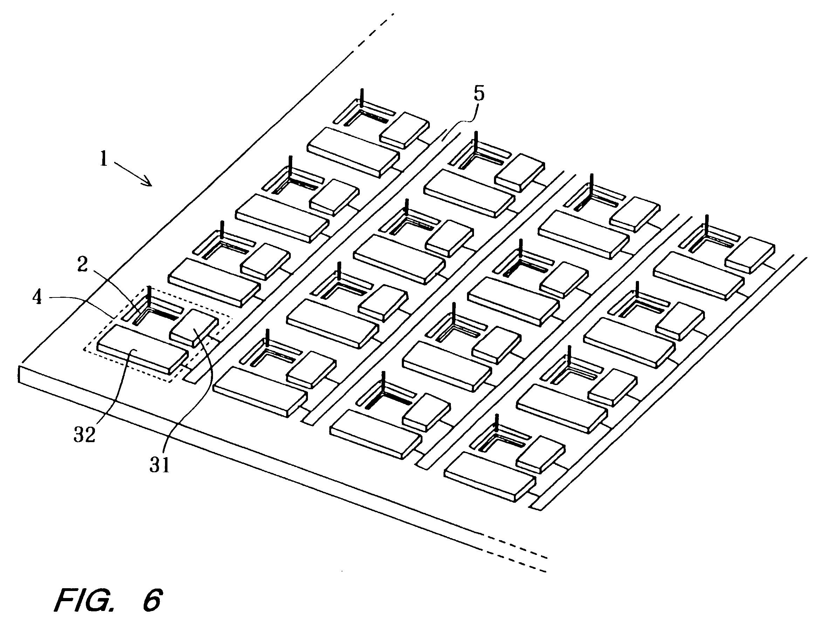

This problem can be eliminated by using a probe device (1) in which L-shaped bridge parts, such as those shown in Figure 6, are used as probes. In the probe device (1) shown in Figure 6, the W/R circuits (31), probe driving circuits (32), probe cells (4), and bus lines (5) are similar to those in the probe device (1) shown in Figure 1, except for the fact that the probes (2) consist of L-shaped parts. As in the case of the probe device (1) shown in Figure 1, these parts are formed by means of a monolithic semiconductor process.

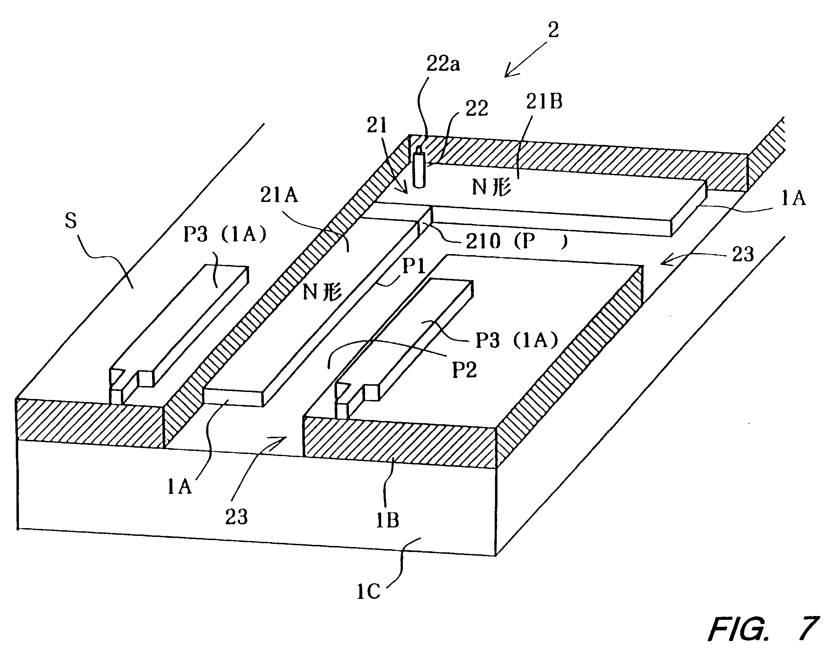

Figure 7 is a detailed illustration of one example of one of the probes (2) shown in Figure 6. The main body (21) of the probe (2) is formed by an L-shaped bridge part consisting of first and second arms (21A) and (21 B) which protrude from the probe device (1). The supporting points of the probe main body (21) are not shown in Figure 7.

The probe main body (21) is formed so that it protrudes over a groove (23), and the semiconductor undersurface layer (1C) is exposed at the bottom of this groove (23). The two arms (21A) and (21B) are formed from the semiconductor surface layer (1A). Here, the first and second arms (21A) and (21B) both consist of an N type semiconductor. A P type region (210) is formed in the boundary area of the first and second arms (21A) and (21B), so that said first and second arms (21A) and (21B) contact each other in an insulated state via the P type region (210).

The undersurface of the first arm (21A) forms a driving electrode (P1) for the probe (2). A conductive needle (22) is formed at the tip end of the second arm (21 B). The tip (22a) of said conductive needle (22) is formed as a columnar part with a uniform cross section. This tip (22a) is used to achieve contact with the memory medium (71) (see Figure 4).

In Figure 7, the portion of the exposed surface of the semiconductor undersurface layer (1C) that faces the first arm (21A) forms a second electrode (P2). A pair of auxiliary electrodes (P3, P3), formed from the semiconductor surface layer (1A), are formed on the substrate surface (S) along the sides of the groove (23) where the first arm (21A) is located. These electrodes (P1, P2, P3) are connected to the probe driving circuit (32) (see Figure 6) by wiring, such as that already shown in Figure 3 (A) for the probe (2) shown in Figure 2.

The conductive needle (22) is connected to the W/R circuit (31) (see Figure 6) via the second arm (21B), which itself acts as wiring, and wiring not shown in the figures. If the probe main body has a laminated structure, such as that shown in Figures 2 and 5, warping of said probe main body may occur during manufacture so that practical use becomes impossible. However, a probe main body with the structure shown in Figure 7 has a single-layer structure. Accordingly, there is no warping that would cause any problems in terms of practical use.

The probes (2) shown in Figures 6 and 7 are positioned in prescribed positions by means of a positioning device (91), such as that shown in Figure 4, and are subjected to repulsive-force control by means of the probe driving circuits (32). Furthermore, in the probes (2) shown in Figures 6 and 7, the tip portion of the L-shaped bridge part operates with the supporting parts of the two arms (21A) and (21B) used as supporting points. Specifically, the conductive needle (22) of each probe moves vertically with respect to the surface of the memory medium (71), but does not move horizontally with respect to said surface. Accordingly, there is no problem of the position of the conductive needle (22) being shifted as a result of flexing of the probe main body (21) in the direction parallel to the substrate surface (S). Thus, positioning of the respective conductive needles (22) can be accurately performed.

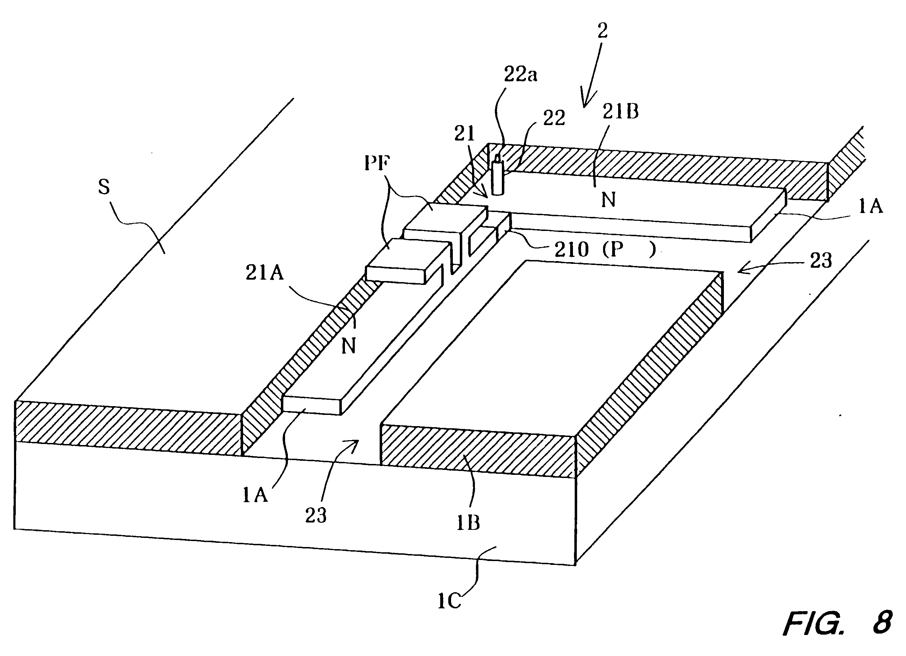

In the case of the probes (2) shown in Figures 6 and 7 as well, attractive-force control between said probes and the memory substrate (7) (see Figure 4) may be accomplished by using electrode fins (PF) of the type shown in Figure 5. In this case, as is shown in Figure 8, the electrode fins (PF) are installed on the first arm (21A). In this case, the auxiliary electrodes (P3) shown in Figure 7 are not installed.

Instead, attractive-force control is performed between the electrode fins (PF) and an electrode (PM) formed on the memory substrate (7) by means of wiring similar to that shown in Figure 3 (B).

In a memory device using the probes (2) shown in Figures 7 and 8, as in the memory device using the probes (2) shown in Figures 2 and 5, the W/R circuits (31) and probe driving circuits (32) are installed in close proximity to the probes (2). Accordingly, the effects of stray capacitance and noise are almost negligible.

In the memory device using the probes (2) shown in Figures 7 and 8, the second arm (21B) of each probe is spatially separated from the first arm (21A). Accordingly, the stray capacitance generated in the second arm (21B) (which functions as wiring) can be virtually ignored.

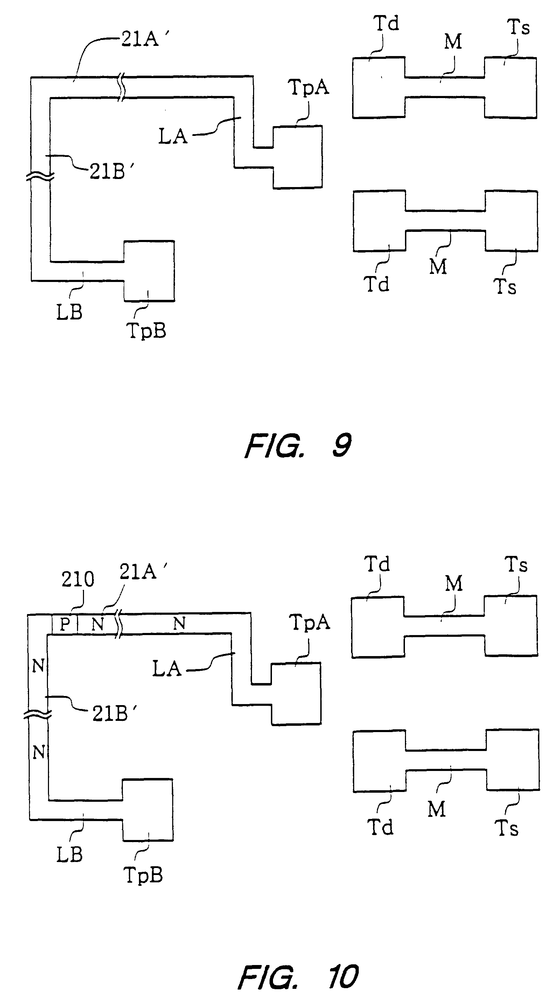

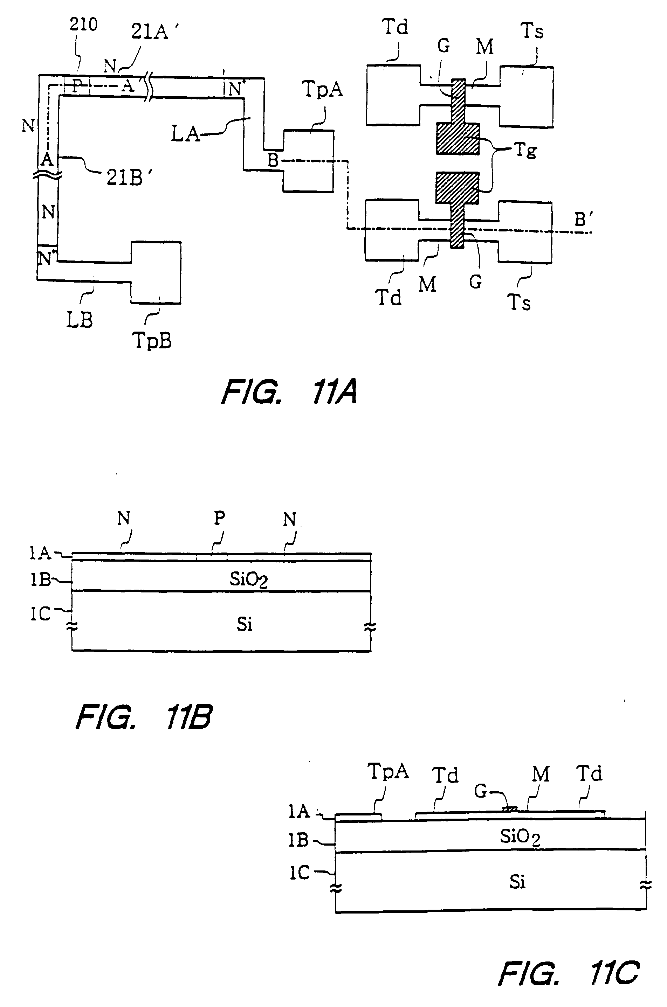

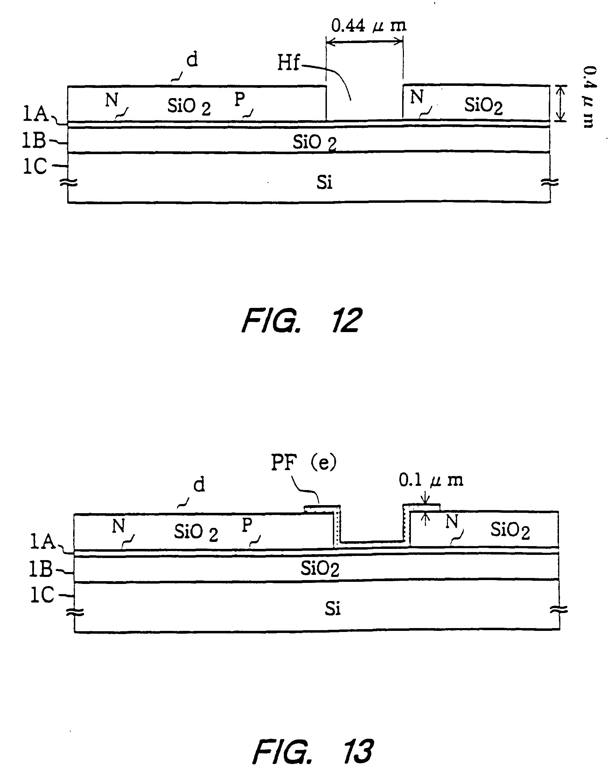

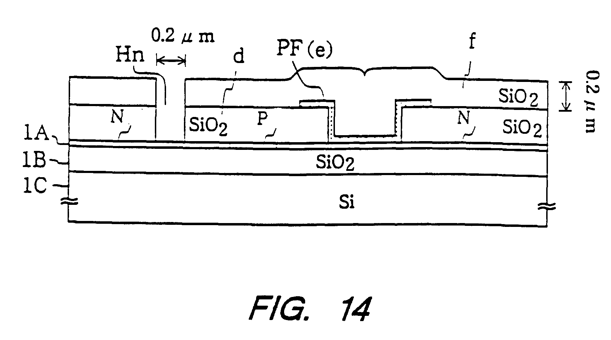

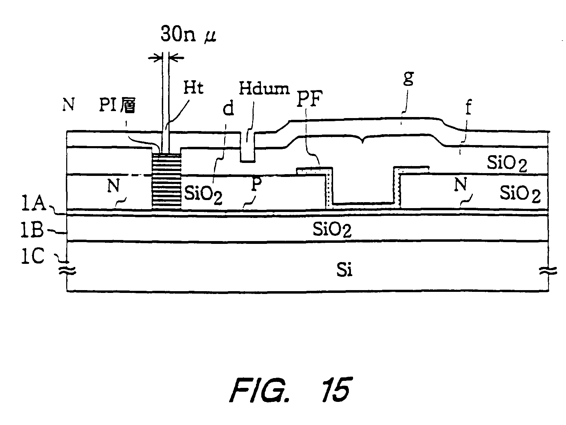

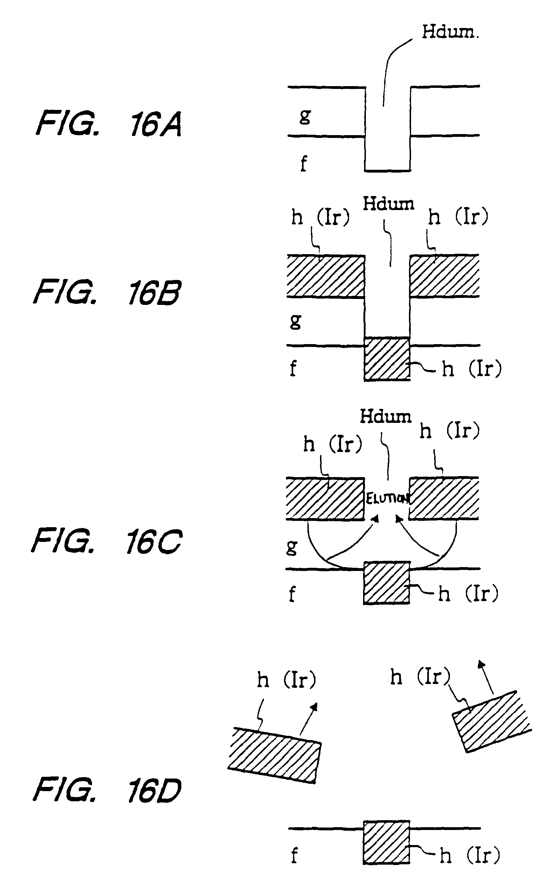

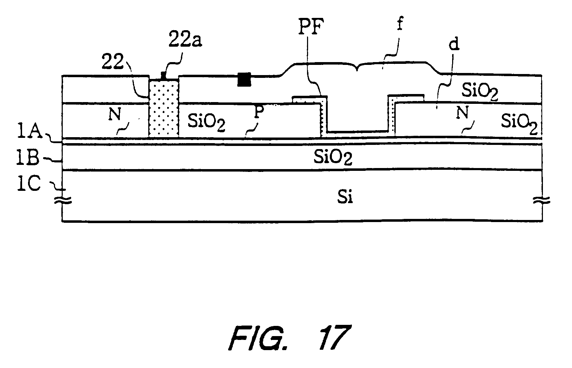

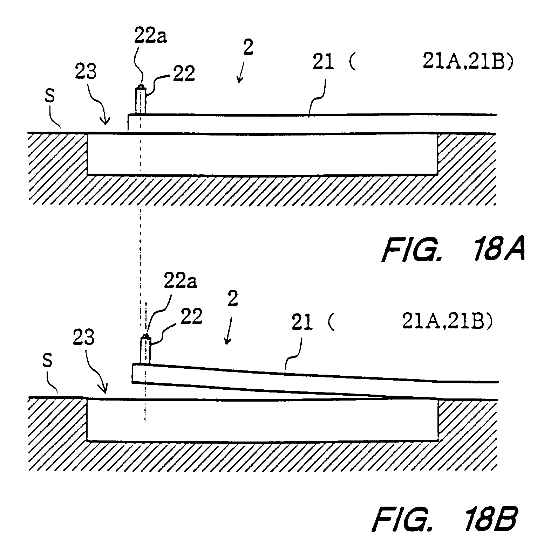

Below, one example of the manufacturing process of the probes (2) shown in Figure 8 is described with reference to Figures 9 through 18.
(1-1) A silicon on insulator (SOI) wafer, consisting of a semiconductor surface layer (1A), an insulating intermediate layer (1B), and a semiconductor undersurface layer (1C) is prepared. For example, this SOI wafer is a wafer manufactured using universally known SOI techniques such as wafer bonding techniques, and thus is not a special type of wafer.
(1-2) As is shown in Figure 9, portions (21A') and (21B') which form the first and second arms (21A) and (21B) of the probe main body (21), portions which form terminals (TpA) and (TpB) that are connected to said first and second portions (21A') and (21B'), wiring (LA) which connects the first portion (21A') and terminal (TpA), wiring (LB) which connects the second portion (21B') and terminal (TpB), and portions which form the silicon substrate (M) and terminals (Td) and (Ts) of the probe driving circuit (as is described later, the probe driving circuits are CMOSFET's in the preferred embodiment of the invention), are formed by patterning of the semiconductor surface layer (1A).
(1-3) N and P type regions, where the P type region is P type region (210) in Figure 10, are formed in the first and second portions (21A') and (21 B') by ion implantation. Furthermore, the probe driving circuit is omitted from the same figure. The amount of ion implantation used to form the N type regions is an amount sufficient to insure the necessary conductivity as wiring. Ordinarily, this amount is approximately 1017 to 1018 cm⁻³.
   The amount of ion implantation used to form the P type region is an amount that produces sufficient electrical insulation by means of a PNP junction. Ordinarily, this amount is approximately 1018 cm⁻³. If the doping concentrations of the respective regions are set at higher values, warping may occur in the probe main body. However, warping of the probe main body can be sufficiently controlled by setting the doping concentrations at approximately the values described above. Figure 10 shows the state following this ion implantation.
(1-4) The CMOSFET gate oxide films are formed.
(1-5) For example, a polysilicon layer is deposited by low pressure chemical vapor deposition (LPCVD), and doping is performed in the CMOSFET silicon substrate portions (M).
(1-6) Patterning of the polysilicon layer is performed. The CMOSFET gate electrodes (G) and the gate terminals (Tg) of said electrodes (G) are formed by this patterning. All of the polysilicon layer is removed except for these electrodes (G) and terminals (Tg). When the N+ diffusion region of each MOSFET is formed, the wiring portions (LA) and (LB) are also converted into N+ diffusion regions. As a result, good contact can be obtained between the probe main body (21) and the metal wiring, which is described later (see (1-20)). Figure 11 (A) shows the conditions of doping of the probe main body (21) following N+ diffusion. Figure 11 (B) is a sectional view along line A-A' in Figure 11 (A), and Figure 11 (C) is a sectional view along line B-B'in Figure 11 (A).
(1-7) An SiO₂ layer (d) is deposited to a thickness of, for example approximately 0.4 microns.
(1-8) A hole (Hf) with a width of, for example approximately 0.44 microns is opened in the area where the electrode fins (PF) are to be formed. Figure 12 shows a sectional view, along a line corresponding to line A-A' in Figure 11 (A), of the probe following the opening of the hole (Hf) used to form the electrode fins (PF).
(1-9) An N type polysilicon layer (e) is deposited to a thickness of, for example approximately 0.1 microns.
(1-10) The electrode fins (PF) are formed by patterning the N type polysilicon layer (e). Figure 13 shows a sectional view along a line corresponding to the aforementioned line A-A' following the patterning of the electrode fins (PF).
(1-11) An SiO₂ layer (f) is deposited to a thickness of, for example approximately 0.2 microns.
(1-12) A hole (Hn) with a diameter of, for example approximately 0.2 microns is formed in the area where the conductive needle (22) is to be formed. Figure 14 shows a sectional view along a line corresponding to the aforementioned line A-A' following the opening of the hole (Hn).
(1-13) An N type polysilicon layer is deposited to a thickness of, for example approximately 0.15 microns.
(1-14) This N type polysilicon layer is removed by etching to a depth of, for example slightly more than 0.15 microns. As a result, the main body portion of the conductive needle (22) is formed.
(1-15) A resist layer (g) is deposited to a thickness of, for example approximately 0.1 microns.
(1-16) A hole (Ht) with a prescribed diameter, *e.g.* approximately 30 nm in the preferred embodiment of the invention, is opened by, for example electron beam lithography, ion beam lithography, or X-ray lithography in the portion of the resist layer (g) where the tip part (22a) of the conductive needle (22) is to be formed. At the same time, in addition to this hole (Ht), at least one dummy hole (Hdum) is formed in an appropriate portion of the wafer to facilitate the usual lift-off process. Figure 15 shows a sectional view of the state of the probe following the opening of these holes (Ht) and (Hdum).
(1-17) A layer consisting of the material of the tip portion (22a) of the conductive needle (22) specifically, a layer consisting of a material which is not attacked during the etching of the SiO₂ in process (1-21) which, in the preferred embodiment of the invention is an Ir layer (h), is formed to a thickness of approximately 50 nm. The formation of this Ir layer (h) is accomplished by means of an anisotropic film deposition process. As a result, the conductive needle (22) is formed.
(1-18) The resist layer (g) is stripped away by means of a lift-off process. Figures 16 (A) through 16 (D) are explanatory diagrams that illustrate this lift-off process. Figure 16 (A) shows the vicinity of the dummy hole (Hdum) opened in the resist layer (g) (see step (1-16) above), and Figure 16 (B) shows the state of the probe following the deposition of the Ir layer (h) (see step (1-17) above). Isotropic etching, such as that shown in Figure 16 (C), is performed on the Ir layer (h) shown in Figure 16 (B). As a result, the resist layer (g) is eluted, and the Ir film (h) formed on the resist layer (g) is stripped away, as shown in Figure 16 (D). Figure 17 shows the state of the probe following the completion of the lift-off process.
(1-19) An SiO₂ layer is deposited to a thickness of, for example approximately 0.1 microns.
(1-20) Metal wiring is formed in the required areas by an ordinary metallization process.
(1-21) The resist layer (g) and the insulating intermediate layer (1B) (SiO₂) on the undersurface of the probe (2) are removed by isotropic etching. As a result, a probe (2), such as that shown in Figure 18, is manufactured.

In the manufacturing method illustrated in Figures 9 through 17, a probe (2) with an L-shaped bridge part was manufactured from an SOI wafer consisting of a semiconductor surface layer (1A), an insulating intermediate layer (1B), and a semiconductor surface layer (1C). However, as is shown below, it is also possible to manufacture such a probe (2) with an L-shaped bridge part using a bulk wafer.
(2-1) Manufacture up to and including the formation of the MOSFET gate electrodes of the W/R circuit and probe driving circuit is accomplished by means of an ordinary CMOS process. Here, the probe region is left as the separating region between elements.
(2-2) A second polysilicon film which is used as the probe main body (21) is deposited.
(2-3) Processes similar to the steps (1-3) through (1-6) are performed on the second polysilicon film. In this case, the respective connections between the first and second portions which form the first and second arms (21A) and (21B) of the probe main body (21), and the W/R circuit (31) and probe driving circuit (32), are appropriately formed by a universally known method. For example, the second polysilicon film and the MOSFET gate electrode wiring or N+ diffusion regions may be connected by direct contact holes, or may be wired via metal in a subsequent process.
(2-4) Processes similar to the steps (1-7) and subsequent processes, are performed. As a result, a probe (2) with an L-shaped bridge part is manufactured.

In the above process steps (1-1) through (1-21) and (2-1) through (2-4), the discussion was centered on the method used to form the probes and probe driving circuits, and no description was given concerning the method used to form the W/R circuits or buses. Furthermore, several processes such as channel ion injection, were omitted from the description. However, it is self-evident that a person skilled in the art would understand the steps manufacturing process, and would be able to add processes, such as W/R circuit and bus formation processes and ion implantation to the steps processes. Furthermore, it is also self-evident that a person skilled in the art would be able to manufacture the probe device (1) of the invention based on the above description, by using appropriate monolithic semiconductor processes and micro-machining techniques.

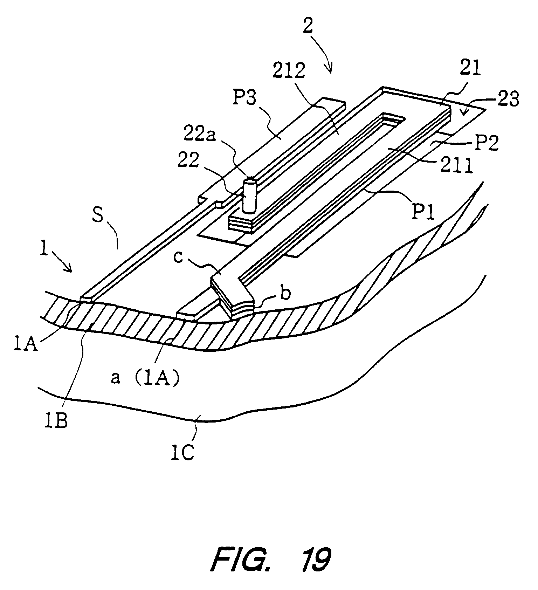

In the case of the probes (2) shown in Figures 2, 5, 7, and 8, there may be instances in which there is a shift in the position of the tip (22a) of the conductive needle in the direction parallel to the substrate surface (S) of the probe device (1) when the probe (2) is actuated, as shown in Figures 18(A) and (B). Figure 18(A) shows the state of the probe (2) in Figure 2 or 7 prior to being driven, while Figure 18(B) shows the state of said probe (2) after being driven. In cases where this positional shift is a problem, the main body (21) of each probe may be constructed from a bridge part with a reverse bend consisting of arms (211) and (212), as shown in Figure 19.

In Figure 19, the end portion of the arm (211) is fastened to the substrate of the probe device (1). The conductive needle (22) is attached to the tip of the other end portion of the bent bridge part facing the memory substrate (7) (see Figure 4). An electrode (P1) is installed on the undersurfaces of the arms (211) and (212). The probe (2) shown in Figure 19 has roughly the same construction as the probe (2) shown in Figure 2, except for the fact that the probe (2) shown in Figure 19 is formed with a reverse bend.

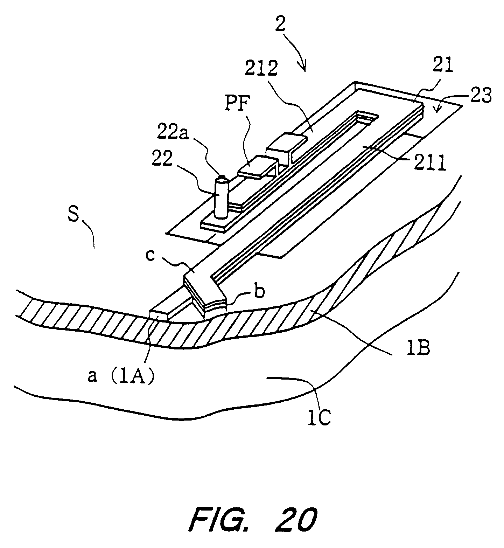

Figure 20 illustrates a case where electrode fins (PF) are formed on the arm (212) of the probe main body (21) shown in Figure 19. The probe (2) shown in Figure 20 has roughly the same construction as the probe (2) shown in Figure 5, except for the fact that the probe (2) shown in Figure 20 is formed with a reverse bend.

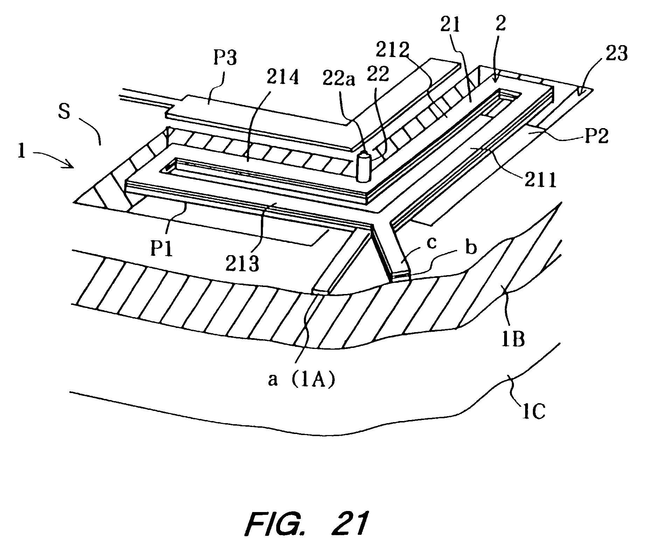

Figure 21 shows a probe (2) with a shape formed by joining the tip ends of the respective arms of a pair of bridge parts with reverse bends of the type shown in Figure 20. The bridge parts used here have left-right symmetry. The probe main body (21) consists of arms (211), (212), (213) and (214) which protrude parallel to the substrate surface (S) of the probe device (1). The arms (211) and (212) are parallel to each other, and the arms (213) and (214) are parallel to each other. The probe main body (21) is constructed from these respective arms (211) through (214). Furthermore, the apex of the L-shaped bridge part formed by the arms (211) and (213) is fastened to the substrate of the probe device (1).

The conductive needle (22) is attached to the apex of the L-shaped bridge part formed by the arms (212) and (214). An electrode (P1) is formed on the undersurfaces of the respective arms (211) through (214). A metal wiring layer (c), which is used to connect the conductive needle (22) and the W/R circuit, is formed on the respective arms (211) through (214).

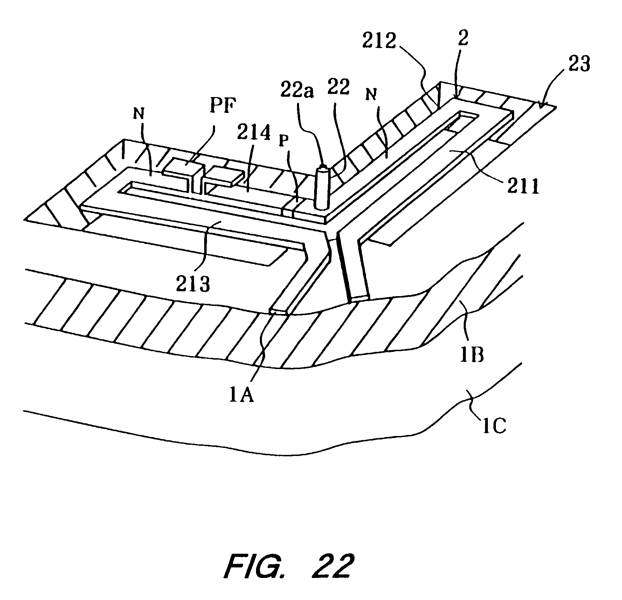

Figure 22 shows a probe (2) equipped with electrode fins which is formed by applying the NPN insulating structure of the probe shown in Figure 8 to the probe with a reverse-bend structure shown in Figure 21. These electrode fins (PF) are used to perform attractive-force control by means of the electrostatic force between said fins and the memory substrate (7) (see Figure 4). In cases where a probe main body with a laminated structure such as that shown in Figure 20 or Figure 21 is used, there may be instances, as in the case of Figures 2 and 5, in which warping occurs during manufacture so that practical use becomes impossible. However, the probe main body (21) whose structure is shown in Figure 22 has a single-layer structure. Accordingly, as in the case of the probe shown in Figure 8, there is no warping that would cause any problems in terms of practical use.

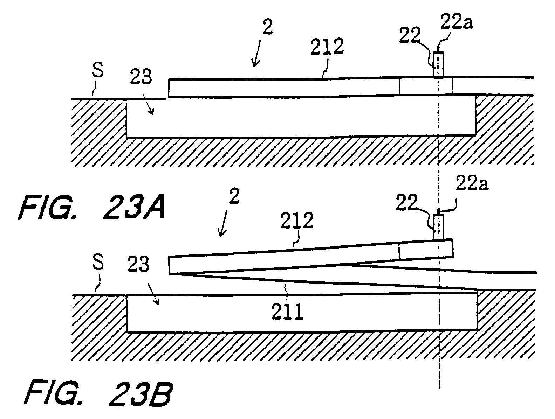

By forming each probe as a bridge part with a reverse bend as shown in Figures 19 through 22, it is possible to design the system so that there is almost no positional shift of the conductive needle tip (22a), regardless of the extent of actuation of the probe main body (21) (as is shown in Figures 23(A) and (B). Figure 23(A) shows the state of the probe (2) in Figure 19 prior to driving, while Figure 23(B) shows the state of said probe (2) after said probe has been driven.

The memory substrate (7) may be a flat plate-form substrate which has a memory medium (71) formed on its surface, or a substrate in which lattice-form grooves are formed in the aforementioned flat plate-form memory medium. Thus, substrates with various constructions may be used.

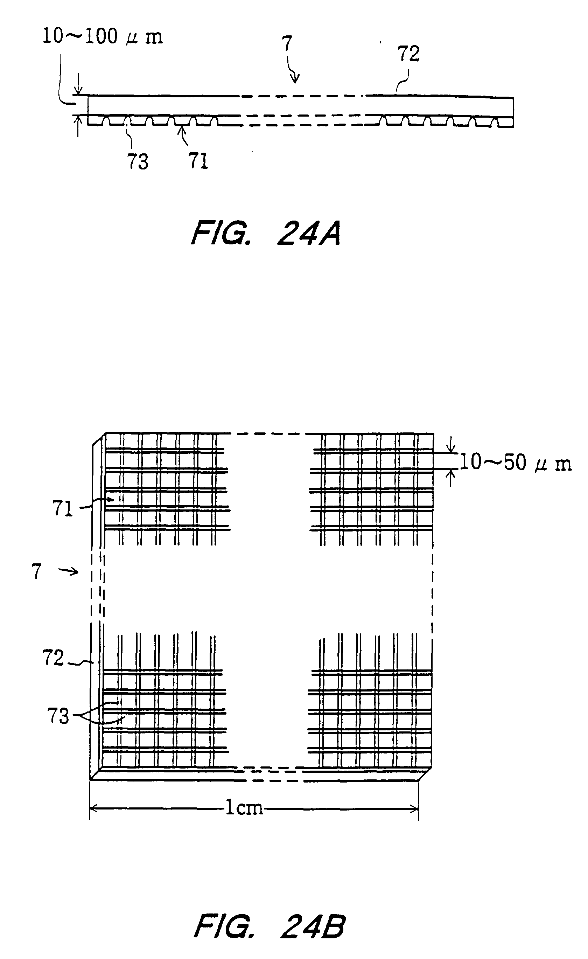

Figures 24 (A) and (B) are a model sectional view and a model plan view which illustrate one example of memory substrate (7) with lattice-form grooves formed in its surface which can be used in the memory device of the invention. The memory substrate (7) (Si substrate) has the shape of a square tile which is approximately 1 cm on a side, with a thickness of approximately 10 to 100 microns. This memory substrate (7) is formed by laminating a substrate (72) and a memory medium (71). Separating grooves (73) are formed over the entire surface of the memory substrate (7).

Generally,warping caused by thermal expansion or thermal contraction tends to occur during the manufacture of said substrate if the memory substrate is too thin. However, because the memory substrate (7) shown in Figures 24 (A) and (B) has separating grooves (73) formed in its surface, there is no warping that would cause any problems in terms of practical use, even if said memory substrate (7) is thin. Accordingly, in cases where the positioning device (91) (see Figure 4) is constructed as a device which moves the memory substrate (7), high-speed movement of said memory substrate (7) is possible as a result of the reduction in weight achieved. The separating grooves (73) can be formed by such techniques as photolithography or etching.

It is usually desirable to form the separating grooves (73) so that said grooves are positioned at the boundaries between adjacent recording regions of the memory medium (71), where one recording region is the area accessed by one probe. If the spacing of the separating grooves (73) is too great, warping cannot be reduced to the desired level. The separating grooves (73) are ordinarily formed on the boundaries of all of the recording regions. If the spacing of the separating grooves (73) is too small, it becomes impossible to position said grooves at the boundaries of adjacent recording regions. In cases where warping caused by thermal expansion or thermal contraction during manufacture is a problem, the depth of the separating grooves (73) may be set at a value which is equal to half or more of the thickness of the memory substrate (7).

As described above, the memory device of the invention is as follows:

A memory device equipped with a memory substrate that has a memory medium formed on its surface, and a probe device that includes:
(a) a plurality of probes with conductive needles that are used to read and write information in the memory medium;
(b) a positioning device that is used to position the conductive needles in prescribed positions on the surface of the memory medium, with all of said needles being positioned at the same time;
(c) write-read circuits that are used to read and write information in the memory medium via the conductive needles; and
(d) probe driving circuits that are provided for each of the conductive needles, and which are used to place the surface of the memory medium and the tips of the conductive needles in a state of contact, where the probes, write-read circuits, and probe driving circuits are formed in close proximity to each other on the probe device by means of a monolithic semiconductor process.

The invention has, *inter alia*, the following desirable working configurations:
- A memory device, as defined above, which is characterized by the fact that the probes are actuated by electrostatic force.
- A memory device, as defined above, which is characterized by the fact that the memory substrate is an electrode which interacts with'the probes by electrostatic force.
- A memory device, as defined above, which is characterized by the fact that auxiliary electrodes, *i.e.* electrode fins, which have fins that are parallel to the memory substrate are formed at a prescribed height on the memory substrate sides of the probes.
- A memory device, as defined above, which is characterized by the fact that the probe device is manufactured from a wafer consisting of a silicon surface layer, an insulating intermediate layer, and a silicon undersurface layer, and the probes are formed from the silicon surface layer of the wafer.
- A memory device, as defined above, which is characterized by the fact that the probes are actuated by a piezoelectric force, *i.e.* a force generated by a bimorph piezo electric structure or an electrostatic force.
- A memory device, as defined above, which is characterized by the fact that the tips of the conductive needles consist of columnar bodies which have a uniform cross section.
- A memory device, as defined above, which is characterized by the fact that the W/R circuits perform the reading or writing of information with respect to the recording regions only when the surface of the memory medium and the tips of the conductive needles are in contact with each other.
- A memory device, as defined above, which is characterized by the fact that the memory substrate has a plurality of lattice-form separating grooves.
- A memory device, as defined above, which is characterized by the fact that the memory medium consists of a dielectric or ferroelectric substance.
- A memory device, as defined above, which is characterized by the fact that the probe driving circuits are controlled so that when the surface of the memory medium and the tips of the conductive needles are in a state of contact, the repulsive force applied to the tips of said conductive needles does not exceed the inter-atomic bonding force of the material of said conductive needles.

The invention is constructed as described above, and provides at least the following advantages over the prior art:

Because the probes, W/R circuits, and probe driving circuits are manufactured by a monolithic semiconductor process, the cost of manufacturing the probes can be reduced. Furthermore, because the probes are installed in close proximity to each other on the probe device, a high parallelness is assured for the respective probes.

Moreover, because the probes, W/R circuits, and probe driving circuits are installed in close proximity to each other on the probe device, a high parallelness can be obtained for the respective probes. As a result, the peripheral circuitry can be simplified, *e.g.* there is no need for circuits to insure parallelness.

By installing the probes, W/R circuits, and probe driving circuits in close proximity to each other, it is possible to use the same bus lines for a multiple number of probe cells. Accordingly, the density of the probes can be increased, and one bus line can be used for a multiple number of probe cells.

Because either probes actuated by electrostatic force or probes actuated by piezoelectric force may be used as the probes, the degree of freedom in designing the probe device is expanded.

In cases where the probes used are probes actuated by electrostatic force, said probes can be actuated by the electrostatic force between said próbes and the memory substrate. Accordingly, the probe driving force can be increased. In particular, by installing electrode fins on the probes, it is possible to insure a sufficient driving force even in cases where the W/R circuits and probe driving circuits protrude from the substrate surface of the probe device.

Because the tips of the conductive needles (22) are formed as columnar bodies that have a uniform cross section, there is no change in the shape of the parts contacting the memory medium, even if said tips of the conductive needles should become worn down as a result of contact with the memory medium.

Because the memory medium, *e.g.* consisting of a dielectric or ferroelectric substance, has a multiple number of separating grooves, warping of the memory substrate caused by thermal expansion is eliminated. As a result, material costs can be reduced, and the weight of the memory substrate can be decreased compared to conventional memory substrates. Accordingly, high-speed reading and writing of information are possible, even in cases where the positioning of the probes is accomplished by moving the memory substrate.

In cases where L-shaped bridge parts consisting of first and second arms are used as probes, said probes can be constructed so that the wiring (second arm) that performs the transmission of data and the first arm that has a driving electrode are spatially separated from each other. In such cases, the stray capacitance generated between the aforementioned electrode and the wiring used for the reading and writing of information can be greatly reduced.

The repulsive force applied to the atoms in the tips of the conductive needles when the probes contact the recording regions can be controlled so that said force does not exceed the bonding force of the atoms in the tips of said conductive needles. Accordingly, wear and damage of the conductive needles can be virtually eliminated, so that the durability of the probes can be greatly increased compared to conventional probes.

## Claims

1. A memory device, comprising:
a substrate (7) having a memory medium (71) formed on a substrate surface;
a probe device (1) including a plurality of probe cells (4) and a substrate (1A,1B,1C) having a substrate surface (S); and
a positioning device (91) that mounts the memory medium (71) opposite the substrate surface (S) and that moves one of the memory medium (71) and the substrate surface (S) relative to the other in a direction parallel to the memory medium (71);
wherein each of said plurality of probe cells (4) comprises:
a probe (2) formed in the substrate (1A,1B,1C) and including part of the substrate surface (S), the probe (2) comprising a conductive needle (22) for reading and writing information in said memory medium (71), the conductive needle (22) projecting towards the memory medium (71), the conductive needle (22) including a needle tip (22a) adjacent the memory medium (71),
a write-read circuit (31) for reading and writing information in the memory medium (71) via the conductive needle (22), the write-read circuit (31) being formed in the substrate (1A,1B,1C) and projecting from the substrate surface (S) towards the memory medium (71), the write-read circuit (31) being electrically connected to the conductive needle (22),
an auxiliary electrode (PF) mounted on the probe (2), the auxiliary electrode (PF) being located between the probe (2) and the memory medium (71), the auxiliary electrode (PF) being disposed substantially parallel to, and spaced, from the substrate surface (S); and
a probe driving circuit (32) for placing a surface of the memory medium (71) in contact with the tip of the conductive needle (22), the probe driving circuit (32) being formed in the substrate (1A,1B,1C) and projecting from the substrate surface (S) towards the memory medium (71), the probe driving circuit (32) having an output electrically connected between the auxiliary electrode (PF) and the memory medium (71)
**characterized in that**
the needle tip (22a) has a length in a direction perpendicular to the substrate surface (S); and
the needle tip (22a) has a constant cross section along its length in a plane parallel to the substrate surface (S).

2. The memory device of claim 1, in which:
the substrate includes a silicon surface layer (1A), a silicon oxide intermediate layer (1B), and a silicon undersurface layer (1C); and
the probe (2) is formed in the silicon surface layer (1A).

3. The memory device of claim 1 or 2, in which the write-read circuit (31) reads or writes information in the memory medium (71) only when the needle tip (22a) is in contact with the memory medium (71).

4. The memory device of one of claims 1 to 3, in which:
the needle tips (22a) are formed of a material;
plural atoms of the material of the needle tips (22a) contact the surface the memory medium (71) when the needle tips (22a) contact the surface of the memory medium (71); and
the probe driving circuit (31) is controlled so that a repulsive force applied to the needle tips when the surface of the memory medium (71) and the needle tip are in contact does not exceed an inter-atomic bonding force of the material of the needle tips (22a).

5. A memory device, comprising:
a planar memory medium (71);
a probe device (1) including:
a substrate (1A,1B,1C) having a substrate surface (S), and probes (2) arrayed on the substrate surface (S), each of the probes (2) including a conductive needle (22) projecting from the probe (2) and terminating in a needle tip (22a), wherein the probes (2) read or write information in the memory medium (71) only when the needle tip (22a) is in contact with the memory medium (71); and
a positioning device (91) that mounts the memory medium (71) opposite the substrate surface (S) with the needle tips (22a) adjacent the memory medium (71), and that moves one of the memory medium (71) and the substrate surface (S) relative to the other in a direction parallel to the memory medium (71);
**characterized in that**
the needle tip (22a) has a length in a direction perpendicular to the substrate surface (S), and has a constant cross section along its length in a plane parallel to the substrate surface (S).

6. The memory device of claim 5, in which:
the substrate includes a silicon surface layer (1A), a silicon oxide intermediate layer (1B), and a silicon undersurface layer (1C); and
the probes (2) are formed in the silicon surface layer (1A).

7. The memory device of claims 5 or 6, in which:
the needle tips (22a) are formed of a material; and when the needle tips (22a) contact the surface of the memory medium (71):
plural atoms of the material of the needle tips (22a) contact the surface the memory medium, and
the probes (2) apply a force to the needle tips (22a) that does not exceed an inter-atomic bonding force of the material of the needle tips (22a) when divided among the plural atoms of the material of the needle tips (22a) contacting the surface of the memory medium (71).

## Patentansprüche

1. Speichervorrichtung mit folgenden Merkmalen:
einem Substrat (7), das ein Speichermedium (71) aufweist, welches auf einer Substratoberfläche ausgebildet ist;
einer Sondenvorrichtung (1), die eine Mehrzahl von Sondenzellen (4) und ein Substrat (1A, 1B, 1C), das eine Substratoberfläche (S) aufweist, umfaßt; und
einer Positionierungsvorrichtung (91), die das Speichermedium (71) gegenüber der Substratoberfläche (S) anordnet, und die entweder das Speichermedium (71) oder die Substratoberfläche (S) relativ zu dem anderen in einer Richtung parallel zu dem Speichermedium (71) bewegt;
wobei jede der Mehrzahl von Sondenzellen (4) folgende Merkmale aufweist:
eine Sonde (2), die in dem Substrat (1A, 1B, 1C) ausgebildet ist und einen Teil der Substratoberfläche (S) umfaßt, wobei die Sonde (2) eine leitende Nadel (22) zum Lesen und Schreiben von Informationen in dem Speichermedium (71) aufweist, wobei die leitende Nadel (22) in Richtung des Speichermediums (71) vorsteht, wobei die leitende Nadel (22) eine Nadelspitze (22a) benachbart zu dem Speichermedium (71) umfaßt,
eine Schreib-Lese-Schaltung (31) zum Lesen und Schreiben von Informationen in dem Speichermedium (71) über die leitende Nadel (22), wobei die Schreib-Lese-Schaltung (31) in dem Substrat (1A, 1B, 1C) ausgebildet ist und von der Substratoberfläche (S) in Richtung des Speichermediums (71) vorsteht, wobei die Schreib-Lese-Schaltung (31) mit der leitenden Nadel (22) elektrisch verbunden ist,
eine Hilfselektrode (PF), die an der Sonde (2) angeordnet ist, wobei die Hilfselektrode (PF) sich zwischen der Sonde (2) und dem Speichermedium (71) befindet, wobei die Hilfselektrode (PF) im wesentlichen parallel zu der Substratoberfläche (S) und von dieser beabstandet angeordnet ist; und
eine Sondensteuerungsschaltung (32) zum Anordnen einer Oberfläche des Speichermediums (71) in Kontakt mit der Spitze der leitenden Nadel (22), wobei die Sondensteuerungsschaltung (32) in dem Substrat (1A, 1B, 1C) ausgebildet ist und von der Substratoberfläche (S) in Richtung des Speichermediums (71) vorsteht, wobei die Sondensteuerungsschaltung (32) einen Ausgang aufweist, der elektrisch zwischen die Hilfselektrode (PF) und das Speichermedium (71) geschaltet ist,
**dadurch gekennzeichnet, daß**
die Nadelspitze (22a) eine Länge in einer Richtung senkrecht zu der Substratoberfläche (S) aufweist; und
die Nadelspitze (22a) einen konstanten Querschnitt entlang ihrer Länge in einer Ebene parallel zu der Substratoberfläche (S) aufweist.

2. Speichervorrichtung gemäß Anspruch 1, bei der:
das Substrat eine Oberflächenschicht (1A) aus Silizium, eine Zwischenschicht (1B) aus Siliziumoxid und eine Unterseitenschicht (1C) aus Silizium umfaßt; und
die Sonde (2) in der Oberflächenschicht (1A) aus Silizium ausgebildet ist.

3. Speichervorrichtung gemäß Anspruch 1 oder 2, bei der die Schreib-Lese-Schaltung (31) Informationen in dem Speichermedium (71) nur liest oder schreibt, wenn die Nadelspitze (22a) sich in Kontakt mit dem Speichermedium (71) befindet.

4. Speichervorrichtung gemäß einem der Ansprüche 1 bis 3, bei der:
die Nadelspitzen (22a) aus einem Material ausgebildet sind;
eine Mehrzahl von Atomen des Materials der Nadelspitzen (22a) die Oberfläche des Speichermediums (71) berühren, wenn die Nadelspitzen (22a) die Oberfläche des Speichermediums (71) berühren; und
die Sondensteuerungsschaltung (31) derart gesteuert wird, daß eine Abstoßungskraft, die auf die Nadelspitzen ausgeübt wird, wenn sich die Oberfläche des Speichermediums (71) und die Nadelspitzen berühren, eine zwischenatomare Bindungskraft des Materials der Nadelspitzen (22a) nicht übersteigt.

5. Speichervorrichtung mit folgenden Merkmalen:
einem ebenen Speichermedium (71);
einer Sondenvorrichtung (1), die folgende Merkmale umfaßt:
ein Substrat (1A, 1B, 1C), das eine Substratoberfläche (S) und Sonden (2), die auf der Substratoberfläche (S) angeordnet sind, aufweist, wobei die Sonden (2) eine leitende Nadel (22) umfassen, die von der Sonde (2) hervorsteht und in einer Nadelspitze (22a) endet, wobei die Sonden (2) Informationen in dem Speichermedium (71) nur lesen oder schreiben, wenn die Nadelspitze (22a) sich in Kontakt mit dem Speichermedium (71) befindet; und
einer Positionierungsvorrichtung (91), die das Speichermedium (71) gegenüber der Substratoberfläche (S) anordnet, wobei die Nadelspitzen (22a) benachbart zu dem Speichermedium (71) sind, und die entweder das Speichermedium (71) oder die Substratoberfläche (S) relativ zu dem anderen in einer Richtung parallel zu dem Speichermedium (71) bewegt;
**dadurch gekennzeichnet, daß**
die Nadelspitze (22a) eine Länge in einer Richtung senkrecht zu der Substratoberfläche (S) aufweist und einen konstanten Querschnitt entlang ihrer Länge in einer Ebene parallel zu der Substratoberfläche (S) aufweist.

6. Speichervorrichtung gemäß Anspruch 5, bei der:
das Substrat eine Oberflächenschicht (1A) aus Silizium, eine Zwischenschicht (1B) aus Siliziumoxid und eine Unterseitenschicht (1C) aus Silizium umfaßt; und
die Sonden (2) in der Oberflächenschicht (1A) aus Silizium ausgebildet sind.

7. Speichervorrichtung gemäß Anspruch 5 oder 6, bei der:
die Nadelspitzen (22a) aus einem Material ausgebildet sind; und wenn die Nadelspitzen (22a) die Oberfläche des Speichermediums (71) berühren:
eine Mehrzahl von Atomen des Materials der Nadelspitzen (22a) die Oberfläche des Speichermediums berühren, und
die Sonden (2) eine Kraft auf die Nadelspitzen (22a) aufbringen, die eine zwischenatomare Bindungskraft der Materialien der Nadelspitzen (22a) nicht übersteigt, wenn diese auf die Mehrzahl von Atomen des Materials der Nadelspitzen (22a), die die Oberfläche des Speichermediums (71) berühren, verteilt wird.

## Revendications

1. Un dispositif de mémoire, comprenant:
un substrat (7) ayant un support (71) de mémoire formé sur une surface de substrat ;
un dispositif de sonde (1) qui inclut une série de cellules (4) de sonde et un substrat (1A, 1B, 1C) à surface (S) de substrat ; et
un dispositif de positionnement (91) qui monte le support (71) de mémoire face à la surface (S) de substrat et qui déplace l'un par rapport à l'autre, soit le support de mémoire (71), soit la surface (S) de substrat, dans une direction parallèle au support (71) de mémoire;
dans lequel chaque cellule de la série de cellules de sonde (4) comprend:
une sonde (2) formée dans le substrat (1A, 1B, 1C) et incluant une partie de la surface (S) de substrat, la sonde (2) comprenant une aiguille conductrice (22) pour lire et écrire une information dans ledit support (71) de mémoire, l'aiguille conductrice (22) faisant saillie vers le support (71) de mémoire, l'aiguille conductrice (22) incluant une pointe (22a) d'aiguille adjacente au support (71) de mémoire,
un circuit d'écriture-lecture (31) pour lire et écrire une information dans le support (71) de mémoire au moyen de l'aiguille conductrice (22), le circuit d'écriture-lecture (31) étant formé dans le substrat (1A, 1B, 1C) et faisant saillie de la surface (S) de substrat vers le support (71) de mémoire, le circuit d'écriture-lecture (31) étant connecté électriquement à l'aiguille conductrice (22),
une électrode auxiliaire (PF) montée sur la sonde (2), l'électrode auxiliaire (PF) étant située entre la sonde (2) et le support (71) de mémoire, l'électrode auxiliaire (PF) étant disposée sensiblement en parallèle à la surface (S) de substrat et espacée de celle-ci,
un circuit d'excitation (32) de sonde pour placer une surface du support (71) de mémoire au contact de la pointe de l'aiguille conductrice, le circuit d'excitation (32) de sonde étant formé dans le substrat (1A, 1B, 1C) et faisant saillie de la surface (S) de substrat vers le support (71) de mémoire, le circuit d'excitation (32) de sonde comportant une sortie connectée électriquement entre l'électrode auxiliaire (PF) et le support (71) de mémoire
**caractérisé en ce que**
la pointe (22a) de l'aiguille est d'une certaine longueur dans une direction perpendiculaire à la surface (S) de substrat; et
la pointe (22a) de l'aiguille a une section transversale constante sur toute sa longueur dans un plan parallèle à la surface (S) de substrat.

2. Le dispositif de mémoire selon la revendication 1, dans lequel
le substrat inclut une couche superficielle (1A) de silicium, une couche intermédiaire (1B) d'oxyde de silicium, et une couche sous-jacente (1C) de silicium, et
la sonde (2) est formée dans la couche superficielle (1A) de silicium.

3. Le dispositif de mémoire selon la revendication 1 ou 2, dans lequel le circuit d'écriture-lecture (31) ne lit ou n'écrit une information dans le support (71) de mémoire que lorsque la pointe (22a) de l'aiguille est au contact du support (71) de mémoire.

4. Le dispositif de mémoire selon une quelconque des revendications 1 à 3, dans lequel
les pointes (22a) d'aiguilles sont formées d'une matière;
plusieurs atomes de la matière des pointes (22a) d'aiguilles sont au contact de la surface du support (71) de mémoire lorsque les pointes (22a) d'aiguilles sont au contact de la surface du support (71) de mémoire; et
le circuit d'excitation (31) de sonde est commandé de façon qu'une force répulsive appliquée aux pointes d'aiguilles lorsque la surface du support (71) de mémoire et la pointe de l'aiguille sont en contact ne dépasse pas une force de liaison inter-atomique de la matière des pointes (22a) d'aiguilles.

5. Un dispositif de mémoire qui comprend:
un support plan (71) de mémoire;
un dispositif de sonde (1) qui inclut:
un substrat (1A, 1B, 1C) à surface (S) de substrat, et des sondes (2) agencées en réseau sur la surface (S) du substrat, chacune des sondes (2) incluant une aiguille conductrice (22) qui fait saillie de la sonde (2) et se termine dans une pointe (22a) d'aiguille, les sondes (2) ne lisant ou n'écrivant une information dans le support (71) de mémoire que lorsque la pointe (22a) de l'aiguille est au contact du support (71) de mémoire; et
un dispositif de positionnement (91) qui monte le support (71) de mémoire face à la surface (S) de substrat de façon que les pointes (22a) d'aiguilles soient adjacentes au support (71) de mémoire, et qui déplace l'un par rapport à l'autre, soit le support (71) de mémoire, soit la surface (S) de substrat, dans une direction parallèle au support (71) de mémoire,
**caractérisé en ce que**
la pointe (22a) de l'aiguille est d'une certaine longueur dans une direction perpendiculaire à la surface (S) de substrat et est, sur toute sa longueur, d'une section transversale constante dans un plan parallèle à la surface (S) de substrat.

6. Le dispositif de mémoire selon la revendication 5, dans lequel
le substrat inclut une couche superficielle (1A) de silicium, une couche intermédiaire (1B) d'oxyde de silicium, et une couche sous-jacente (1C) de silicium; et
les sondes (2) sont formées dans la couche superficielle (1A) de silicium.

7. Le dispositif de mémoire selon l'une quelconque des revendications 5 ou 6, dans lequel
les pointes (22a) d'aiguilles sont formées d'une matière; et, lorsque les pointes (22a) d'aiguilles sont au contact de la surface du support (71) de mémoire:
plusieurs atomes de la matière des pointes (22a) d'aiguilles sont au contact de la surface du support de mémoire, et
les sondes (2) appliquent aux pointes (22a) d'aiguilles une force qui, lorsqu'elle est divisée entre la pluralité des atomes de la matière des pointes (22a) d'aiguilles qui sont au contact de la surface du support de mémoire, ne dépasse pas une force de liaison inter-atomique de la matière des pointes (22a) d'aiguilles.
